(19) **Europäisches Patentamt European Patent Office Office européen des brevets**

(11) **EP 2 498 323 B1**

(12) **EUROPEAN PATENT SPECIFICATION**

(45) Date of publication and mention of the grant of the patent:
**07.10.2015 Bulletin 2015/41**

(21) Application number: **12155152.7**

(22) Date of filing: **13.02.2012**

(51) Int Cl.:
*H01M 4/36* (2006.01)      *H01M 4/58* (2010.01)
*H01M 4/525* (2010.01)    *C01G 51/00* (2006.01)
*C01G 53/00* (2006.01)    *H01M 4/02* (2006.01)
*H01M 4/04* (2006.01)     *H01M 4/505* (2010.01)
*H01M 10/052* (2010.01)

(54) **Positive active material, and electrode and lithium battery containing the material**

Positiv-Aktivmaterial und Elektrode und Lithiumbatterie mit dem Material

Matériau actif positif et électrode et batterie au lithium le contenant

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.03.2011 US 201161451017 P**
**24.09.2011 US 201113244392**

(43) Date of publication of application:
**12.09.2012 Bulletin 2012/37**

(73) Proprietor: **Samsung SDI Co., Ltd.**
**Yongin-si, Gyeonggi-do (KR)**

(72) Inventors:
 • **Kim, Jun-Sik**
  **Gyeonggi-do (KR)**
 • **Lee, Chong-Hoon**
  **Gyeonggi-do (KR)**
 • **Kim, Sung-Soo**
  **Gyeonggi-do (KR)**
 • **Lee, Seo-Jae**
  **Gyeonggi-do (KR)**
 • **Shin, Jeong-Soon**
  **Gyeonggi-do (KR)**

(74) Representative: **Russell, Tim et al**
**Venner Shipley LLP**
**200 Aldersgate**
**London EC1A 4HD (GB)**

(56) References cited:
**JP-A- 2007 317 538**     **JP-A- 2009 004 371**
**US-A1- 2007 059 598**   **US-A1- 2007 254 209**
**US-A1- 2008 241 690**   **US-A1- 2009 217 513**
**US-A1- 2010 233 540**   **US-A1- 2010 248 038**
**US-A1- 2010 320 972**   **US-A1- 2011 037 019**

**Description**

The present invention relates to a positive active material, and to an electrode and a lithium secondary battery containing the positive active material.

Recently, lithium secondary batteries have gained attention as a power source for small and portable electronic devices. Lithium secondary batteries use an organic electrolytic solution, and due to the use of the organic electrolytic solution, lithium secondary batteries have a discharge voltage twice that of a conventional battery using an alkali aqueous solution, and thus, have high energy density.

As positive active materials for use in lithium secondary batteries, oxides that intercalate lithium ions and include lithium and a transition metal are often used. Examples of such oxides are $LiCoO_2$, $LiMn_2O_4$, and $LiNi_{1-x-y}Co_xMn_yO_2$ ($0 \leq x \leq 0.5$, $0 \leq y \leq 0.5$). Meanwhile, it is expected that demand for medium or large-sized lithium secondary batteries will increase in the future. For medium or large-sized lithium secondary batteries, stability is an important factor. However, lithium-containing transition metal oxides such as described above have low thermal stability, although they have good charge and discharge characteristics and high energy density. These materials therefore fail to meet the stability requirements of medium to large-sized lithium secondary batteries.

Olivine-based positive active materials, such as $LiFePO_4$, do not generate oxygen even at high temperature because phosphorous and oxygen are covalently bonded to each other. Accordingly, if olivine-based positive active materials are used in a battery, the battery may have good stability due to the stable crystal structure of the olivine-based positive active materials. Thus, research into how to produce large-sized lithium secondary batteries having stability by using olivine-based positive active materials is being carried out.

However, if olivine-based positive active materials are used in the form of nanoparticles to highly efficiently intercalate and deintercalate lithium ions, the resulting electrode has low density. In order to overcome low electrical conductivity, relatively greater amounts of a conductive agent and a binder are used compared to other active materials, and in this case, it is difficult to achieve uniform dispersion of the conductive agent and the electrode has low energy density.

JP2007 317538 discloses a positive electrode containing a phosphorous oxide, having an olivine structure, such as $LiFePO_4$. This document also discloses that the positive electrode active material may contain $LiNi_{0.8}Co_{0.2}O_2$.

US2010/0320972 discloses a composition comprising: a) a lithiated oxide of transition metals containing at least nickel, cobalt and aluminium; b) a lithiated phosphate of at least one transition metal, the surface of which is at least partially covered by a layer of carbon, the proportion by mass of the lithiated oxide of transition metals containing at least nickel, cobalt and aluminium, being less than or equal to 10 % of the weight of the composition, the proportion by mass of the lithiated phosphate of at least one transition metal being greater than or equal to 90 % of the weight of the composition.

In particular, a composition comprising 90% by weight $LiFePO_4$ coated with carbon and 10% by weight $LiNi_{0.8}Co_{0.15}Al_{0.05}O_2$ is disclosed.

US2010/0248038 discloses a positive electrode including a lithium/manganese-containing oxide represented by $Li_aMn_bM_cO_z$ (M is at least one selected from the group consisting of Ni, Co, Al and F, and a, b, c and z satisfy the following equations: $0 \leq a \leq 2.5$, $0 \leq b \leq 1$, $0 \leq c \leq 1$ and $2 \leq z \leq 3$) and a Fe-containing phosphorous compound having an olivine structure.

US2007/0254209 discloses a positive electrode active material containing an olivine lithium phosphate-based compound having an elemental composition represented as $LiMPO_4$, where M is a transition metal including at least Fe.

US2009/0217513 discloses a composite lithium compound having a mixed crystalline structure, which is formed by heating lithium, iron, phosphorous and carbon sources with a lithium metal compound. In particular, a composition comprising 99% by weight $LiFePO_4$ coated with carbon and 1% by weight $LiNi_{0.8}Co_{0.15}Al_{0.05}O_2$ is disclosed. According to a first aspect of the present invention, a positive active material for a lithium secondary battery includes from 70 to 99 weight (wt)% of a phosphate compound having an olivine structure, and from 1 to 30 wt.% of $LiNi_{0.8}Co_{0.15}AlO_2$, characterised in that the particle diameter of primary particles of the phosphate compound is from 50 nm to 2000 nm; wherein the primary or secondary particles of the $LiNi_{0.8}Co_{0.15}Al_{0.05}O_2$ have an average particle diameter (D50) from 0.2 $\mu$m to 20 $\mu$m; and wherein the $LiNi_{0.8}Co_{0.15}Al_{0.05}O_2$ has a particle distribution of which the average particle diameter (D50) is greater than that of the phosphate compound.

In an embodiment, the lithium nickel composite oxide is represented by formula 2:

$$Li_xNi_{1-y}M'_yO_{2-z}X_z \qquad \text{Formula 2}$$

where M' includes at least one metal selected from the group consisting of Co, Al, Mn, Mg, Cr, Fe, Ti, Zr, Mo, and an alloy thereof, and
X is an element selected from the group consisting of O, F, S, and P,
$0.9 \leq x \leq 1.1$, $0 \leq y \leq 0.5$, and $0 \leq z \leq 2$.

A positive active material according to the present invention may improve electrical conductivity and electrode density of a battery.

According to a second aspect of the present invention there is provided an electrode for a lithium secondary battery comprising the positive active material of the invention in its first aspect.

According to a third aspect of the present invention there is provided a lithium secondary battery comprising the positive electrode according to the invention in its second aspect, a negative electrode facing the positive electrode, and a separator interposed between the positive electrode and the negative electrode.

According to a fourth aspect of the present invention there is provided use of a composition comprising from 70 to 99 weight (wt)% of a phosphate compound having an olivine structure, and from 1 to 30 wt.% of $LiNi_{0.8}Co_{0.15}Al_{0.05}O_2$ a positive active material for a lithium secondary battery characterised in that the particle diameter of primary particles of the phosphate compound is from 50 nm to 2000 nm; wherein the primary or secondary particles of the $LiNi_{0.8}Co_{0.15}Al_{0.50}O_2$ have an average particle diameter (D50) from 0.2 $\mu$m to 20 $\mu$m; and wherein the $LiNi_{0.8}CoAl_{0.05}O_2$ has a particle distribution of which the average particle diameter (D50) is greater than that of the phosphate compound.

Positive active materials according to the present invention include a phosphate compound having an olivine structure and a lithium nickel composite oxide. Due to the inclusion of the phosphate compound and the lithium nickel composite oxide, the positive active materials may have high electrical conductivity and electrode density, and thus, lithium batteries including the positive active materials of the invention may have high capacity and good high-rate characteristics.

A more complete appreciation of the present invention, and many of the attendant advantages thereof, will be readily apparent as the same becomes better understood by reference to the following detailed description when considered in conjunction with the accompanying drawings, wherein:

FIG. 1 is a schematic perspective view of a lithium battery according to an embodiment of the present invention.

FIG. 2 shows charge and discharge results per rate of a lithium secondary battery manufactured according to Example 14.

FIG. 3 is a graph of a discharge capacity retention rate at a 2C-rate with respect to a mixed ratio of $LiFePO_4$ (LFP) and $LiNi_{0.8}Co_{0.15}Al_{0.05}O_2$ (NCA), of lithium secondary batteries manufactured according to Examples 11 to 15 and Comparative Examples 8 to 11.

FIG. 4 shows charge and discharge results with respect to a charge cut-to-off voltage change, of a lithium secondary battery manufactured according to Example 14.

Hereinafter, a positive active material according to an embodiment of the present invention, an electrode including the positive active material, and a lithium battery including the electrode will be described in detail.

A positive active material according to the present invention includes from about 70 to about 99 weight (wt)% of a phosphate compound having an olivine structure, and from about 1 to about 30 wt.% of a lithium nickel composite oxide. The phosphate compound having the olivine structure may be represented by Formula 1 below:

$$LiMPO_4 \qquad \text{[Formula 1]}$$

where M includes at least one element selected from the group consisting of Fe, Mn, Ni, Co, and V.

In an embodiment, the phosphate compound having the olivine structure is $LiFePO_4$.

The phosphate compound having the olivine structure may be, for example, lithium iron phosphate ($LiFePO_4$). The phosphate compound having the olivine structure may also include a hetero element, such as Mn, Ni, Co, or V, as a dopant together with lithium iron phosphate ($LiFePO_4$).

The phosphate compound having the olivine structure, such as lithium iron phosphate ($LiFePO_4$), is structurally stable against volumetric changes in the tetrahedral structure of $PO_4$ caused by charging and discharging since phosphorous and oxygen are strongly covalently bonded to each other and have good thermal stability. This will be described by referring to an electrochemical reaction scheme of $LiFePO_4$.

$LiFePO_4$ undergoes intercalation and deintercalation of lithium according to the following reaction scheme:

Intercalation: $LiFePO_4 - xLi+ - xe- \rightarrow xFePO_4 + (1-x)LiFePO_4$
Deintercalation: $FePO_4 + xLi+ + xe- \rightarrow xLiFePO_4$

Since $LiFePO_4$ is structurally stable and the structure thereof is similar to that of $FePO_4$, $LiFePO_4$ may have very stable cyclic characteristics when charging and discharging are repeatedly performed. Accordingly, the phosphate compound having the olivine structure, such as lithium iron phosphate ($LiFePO_4$), suffers less from the reduction in capacity caused by collapse of a crystal structure resulting from overcharging, and generates less gas. Thus, the high-stability phosphate compound may comply with the stability requirements of, in particular, large-sized lithium ion batteries.

However, in the phosphate compound having the olivine structure, oxygen atoms are hexagonally densely filled and thus lithium ions do not smoothly move. In addition, due to its low electrical conductivity, electrons do not smoothly move. However, the positive active material according to the present invention includes a lithium nickel composite oxide having a layer-structure and good electrical conductivity in combination with a phosphate compound having an olivine structure, and thus, the positive active material of the present invention may have higher electrical conductivity than when only a phosphate compound having an olivine structure is used.

Also, during pressing, the lithium nickel composite oxide has higher active mass density than the phosphate compound having the olivine structure. Thus, the low electrode density characteristics of the phosphate compound having the olivine structure may be overcome, and a battery including the positive active material may have high capacity.

According to an embodiment not necessarily part of the present invention, the lithium nickel composite oxide may be a lithium transition metal oxide containing nickel (Ni), and may be represented by, for example, Formula 2 below.

$$Li_xNi_{1-y}M'_yO_{2-z}X_z \qquad \text{[Formula 2]}$$

where M' includes at least one metal selected from the group consisting of Co, Al, Mn, Mg, Cr, Fe, Ti, Zr, Mo, and an alloy thereof, and

X is an element selected from the group consisting of O, F, S, and P,

$0.9 \leq x \leq 1.1$, $0 \leq y \leq 0.5$, and $0 \leq z \leq 2$.

In an embodiment, M' includes at least two metals selected from the group consisting of Co, Al, Mn, Mg, Cr, Fe, Ti, Zr, Mo, and an alloy thereof.

In an embodiment, M' includes two metals selected from the group consisting of Co, Al, Mn, Mg, Cr, Fe, Ti, Zr, Mo, and an alloy thereof.

In an embodiment, M' is at least one metal selected from the group consisting of Co, Al, Mn, Mg, Cr, Fe, Ti, Mo, and an alloy thereof, i.e. M' does not include Zr.

In order to improve high-temperature durability of the lithium nickel composite oxide, some of the nickel atoms contained in the lithium nickel composite oxide may be doped with at least one metal selected from the group consisting of Co, Al, Mn, Mg, Cr, Fe, Ti, Zr, Mo, and an alloy thereof.

According to an embodiment not necessarily part of the present invention, an NCA (nickel cobalt aluminium) system including Co and Al as M' or an NCM (nickel cobalt manganese) system including Co and Mn as M' is used as the lithium nickel composite oxide in terms of energy density, structural stability, and electrical conductivity.

For example, M' in formula 2 may include Co and Al. According to an embodiment not necessarily part of the present invention, the NCA system lithium nickel composite oxide is represented by Formula 3 below.

$$Li_xNi_{1-y'-y''}Co_{y'}Al_{y''}O_2 \qquad \text{[Formula 3]}$$

wherein:

$0.9 \leq x \leq 1.1$;
$0 < y'+y'' \leq 0.2$; and
$0 < y'' \leq 0.1$.

For example, the NCA system lithium nickel composite oxide according to the present invention is $LiNi_{0.5}Co_{0.15}Al_{0.05}O_2$.

In an alternative not forming part of the present invention, M' in formula 2 includes Co and Mn. For example, the NCM system lithium nickel composite oxide may be a nickel-based compound such as $LiNi_{0.6}Co_{0.2}Mn_{0.2}O_2$.

Regarding the positive active material, if the amount of the lithium nickel composite oxide is too small, the effect for increasing electrical conductivity is negligible, and on the other hand, if the amount of the lithium nickel composite oxide is too high, a lithium battery including the positive active material is unstable. Accordingly, the amount of the phosphate compound having the olivine structure is from about 70 to about 99 wt.% and the amount of the lithium nickel composite oxide is from about 1 to about 30 wt.%. As described above, by including about 1 to about 30 wt.% of the lithium nickel composite oxide in combination with the phosphate compound having the olivine structure used as a major component, a battery including the positive active material has stability and high electrical conductivity.

According to an embodiment of the present invention, the amount of the phosphate compound having the olivine structure is from about 80 to about 95 wt.% and the amount of the lithium nickel composite oxide is from about 5 to about 20 wt.%. In an embodiment, the positive active material comprises from 80 to 95 weight % of the phosphate compound having the olivine structure and from 5 to 20 weight % of the lithium nickel composite oxide.

The phosphate compound having the olivine structure may be used in the form of either primary particles having a nano size to highly efficiently intercalate and deintercalate lithium ions, or in the form of secondary particles which are formed by agglomerating the primary particles.

For example, if the phosphate compound having the olivine structure is used in the form of primary particles, the particle diameter may be from about 50 nm to about 2000 nm or, for example, from about 200 nm to about 1000 nm. If the phosphate compound having the olivine structure is used in the form of secondary particles formed by agglomerating the primary particles, the average particle diameter (D50) of the secondary particles may be from about 1 $\mu$m to about 30 $\mu$m.

A surface of the phosphate compound having the olivine structure may be coated with an amorphous layer formed of carbon or metal oxide. In this case, since the amorphous layer formed of carbon or metal oxide coated on the surface is not crystalline, lithium ions can be intercalated in or deintercalated from the phosphate compound having the olivine structure, which is the core part, through the amorphous layer, which is a shell part. In addition to allowing passage of lithium ions, the amorphous layer formed of carbon or metal oxide coated on the surface has good electron conductivity, and thus, functions as a pathway for applying electric current to the phosphate compound core having the olivine structure as an active material, thereby enabling charging and discharging at high rate. Also, if the phosphate compound having the olivine structure is coated with the amorphous layer formed of carbon or metal oxide, an unnecessary reaction between the core material and the electrolytic solution may be controlled and thus a battery having the positive active material may have good stability.

The lithium nickel composite oxide may be used in the form of either primary particles, or secondary particles formed by agglomerating the primary particles. The particle diameter of the lithium nickel composite oxide may be appropriately determined to be suitable for assisting electron conductivity of the phosphate compound having the olivine structure. For example, the particle diameter of the lithium nickel composite oxide may be smaller or greater than that of the phosphate compound having the olivine structure. For example, the primary or secondary particles of the lithium nickel composite oxide may have an average particle diameter (D50) from about 0.2 $\mu$m to about 20 $\mu$m, or for example, from about 0.5 $\mu$m to about 7 $\mu$m.

An electrode according to an aspect of the present invention includes the positive active material described above. The electrode may be used as a positive electrode for a lithium battery.

Hereinafter, an example of a method of manufacturing the electrode will be described in detail.

First, a composition for forming a positive active material layer, including the positive active material according to the present invention, a conductive agent, and a binder is prepared. The composition is mixed with a solvent to prepare a positive electrode slurry, and then, the positive electrode slurry is directly coated and dried on the positive current collector to prepare a positive electrode plate. Alternatively, the positive electrode slurry can be coated on a separate support, and then a film separated from the separate support is laminated on a positive current collector to prepare a positive electrode plate.

A binder for use in the composition for forming a positive active material layer enhances bonding between an active material and a conductive agent and bonding between an active material and a current collector. Examples of the suitable binders are polyvinylidenefluoride, a vinylidenefluoride/hexafluoropropylene copolymer, polyacrylonitrile, polymethylmethacrylate polyvinylalcohol, carboxymethylcellulose (CMC), starch, hydroxypropylcellulose, regenerated cellulose, polyvinylpyrrolidone, polytetrafluoroethylene, polyethylene, polypropylene, ethylene-propylene-diene terpolymer (EPDM), sulfonated EPDM, styrene butadiene rubber, fluoro rubber, and various copolymers. The amount of binder may be from about 1 to about 5 wt.% based on the total weight of the composition for forming the positive active material layer. If the amount of the binder is within the range described above, the positive active material layer may be appropriately attached to the current collector.

A conductive agent for use in the composition for forming a positive active material layer may be any one of various materials that do not cause any chemical change in a battery and have conductivity. Examples of the conductive agent are graphite, such as natural graphite or artificial graphite; carbon black, such as carbon black, acetylene black, ketjen black, channel black, furnace black, lamp black, or thermal black; a conductive fiber, such as carbon fiber, or metal fiber; metal powder, such as fluorinated carbon powder, aluminium powder, or nickel powder; conductive whiskers, such as zinc oxide, or potassium titanate; a conductive metal oxide, such as titanium oxide; and a conductive material, such as a polyphenylene derivative. The amount of conductive agent may be from about 1 to about 8 wt.% based on the total weight of the composition for forming the positive active material layer. If the amount of conductive agent is within the range described above, an electrode manufactured using the conductive agent may have good conductivity.

A solvent that is used with the composition for forming a positive active material layer to prepare the positive electrode slurry may be N-methylpyrrolidone (NMP), acetone, water, etc. The amount of solvent may be from about 1 to about 10 parts by weight based on 100 parts by weight of the composition for forming the positive active material layer. If the amount of solvent is within the range described above, the positive active material layer may be easily formed.

A positive current collector on which the positive electrode slurry is to be coated or laminated may have a thickness of about 3 to about 500 $\mu$m, and may be formed of any one of various materials that have high conductivity and do not cause any chemical change in a battery. The positive current collector may be formed of stainless steel, aluminium, nickel, titanium, calcined carbon or aluminium, or stainless steel that is surface-treated with carbon, nickel, titanium, or silver. The positive current collector may have a non-even surface to allow the positive active material to be more strongly attached thereto, and may be formed of a film, a sheet, a foil, a net, a porous material, a foam, or a non-woven fabric.

The positive electrode slurry may be directly coated or dried on the positive current collector, or a separate film formed of the positive electrode slurry may be laminated on the positive current collector, and then the resultant structure is pressed to complete manufacturing of a positive electrode.

When the electrode including the positive active material is pressed, its active mass density may change according to applied pressure. The active mass density of the electrode may be 2.1 g/cc or more. For example, the active mass density of the electrode may be from about 2.1 to about 2.7 g/cc. In an embodiment, the active mass density of the electrode is from 2.1 to 2.7 g/cc. Meanwhile, in general, an active mass density of a positive electrode formed using only an olivine-based positive active material is from about 1.8 to about 2.1 g/cc. Accordingly, by further including the lithium nickel composite oxide, it is confirmed that the active mass density of the positive electrode can be increased. By doing this, a battery using an olivine-based positive active material has high capacity.

A lithium battery according to an aspect of the present invention includes the electrode as a positive electrode. According to an aspect of the present invention, the lithium battery includes the electrode described above as a positive electrode; a negative electrode disposed facing the positive electrode; and a separator disposed between the positive electrode and the negative electrode. Examples of methods of manufacturing positive and negative electrodes and a lithium battery including the positive and negative electrodes will be described in detail below.

A positive electrode and a negative electrode are respectively manufactured by coating and drying a positive electrode slurry and a negative electrode slurry on a current collector. A method of manufacturing a positive electrode may be the same as presented above.

In order to manufacture a negative electrode, a negative active material, a binder, a conductive agent, and a solvent are mixed to prepare a negative electrode slurry for forming the negative electrode.

The negative active material may be any one of various materials that are conventionally used in the art. Examples of the negative active material are lithium metal, a metal that is alloyable with lithium, a transition metal oxide, a material capable of doping or undoping lithium, and a material in which lithium ions are reversibly intercalated or from which lithium ions are reversibly deintercalated.

Examples of a transition metal oxide are tungsten oxide, molybdenum oxide, titanium oxide, lithium titanium oxide, vanadium oxide, and lithium vanadium oxide. Examples of a material capable of doping or undoping lithium are Si, $SiO_x(0<x<2)$, Si-Y alloy (where Y is alkali metal, alkali earth metal, a Group 13 element, a Group 14 element, a transition metal, a rare earth element, or a combination thereof, and is not Si,) Sn, $SnO_2$, Sn-Y alloy (where Y is alkali metal, alkali earth metal, a Group 13 element, a Group 14 element, a transition metal, a rare earth element, or a combination thereof, and is not Sn), and a mixture including at least one of the foregoing materials and $SiO_2$. Examples of the element Y are Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, It, Pd, Pt, Cu, Ag, Au, Zn, Cd, B, Al, Ga, Sn, In, Ti, Ge, P, As, Sb, Bi, S, Se, Te, Po, and a combination thereof.

Examples of a material in which lithium ions are reversibly intercalated or from which lithium ions are reversibly deintercalated may be any one of various carbonaceous materials used in a conventional lithium battery. For example, a material in which lithium ions are reversibly intercalated or from which lithium ions may be crystalline carbon, amorphous carbon, or a mixture thereof. Examples of crystalline carbon are amorphous, plate-shape, flake-shape, spherical, or fiber-shape natural graphite; and artificial graphite, and examples of amorphous carbon are soft carbon (low-temperature calcined carbon), hard carbon, mesophase pitch carbide, and a calcined coke.

The conductive agent, the binder, and the solvent for use in the negative electrode slurry may be the same as used in manufacturing the positive electrode. A plasticizer may be further added to the positive electrode slurry and the negative electrode slurry to form pores in an electrode plate. Amounts of the negative active material, the conductive agent, the binder, and the solvent may be the same levels as used in a conventional lithium battery.

A negative current collector may have a thickness of about 3 to about 500 $\mu$m. A material for forming the negative current collector may be any one of various materials that have conductivity and do not cause any chemical change in a battery. Examples of a material for forming the negative current collector are copper, stainless steel, aluminium, nickel, titanium, calcined carbon, copper and stainless steel which are surface-treated with carbon, nickel, titanium, silver, and aluminium-cadmium alloy. Like the positive current collector, the negative current collector may have a non-even surface to allow the negative active material to be more strongly attached thereto, and may be formed of a film, a sheet, a foil, a net, a porous material, a foam, or a non-woven fabric.

Like in manufacturing the positive electrode, the negative electrode slurry is directly coated and dried on the negative current collector to form a negative electrode plate. Alternatively, the negative electrode slurry may be cast on a separate support, and then a film separated from the support is laminated on the negative current collector to prepare a negative electrode plate.

The positive electrode and the negative electrode may be spaced from each other by a separator, and the separator may be any one of various separators conventionally used in a lithium battery. In particular, the separator may be a separator that has low resistance to migration of ions of an electrolyte and has a high electrolytic solution retaining capability. Examples of the separator are glass fiber, polyester, Teflon, polyethylene, polypropylene, polytetrafluoroethylene(PTFE), and a combination thereof, each of which may be in a non-woven or woven form. The separator may have a pore diameter of about 0.01 to about 10 $\mu$m, and a thickness of about 5 to about 300 $\mu$m.

A lithium salt-containing non-aqueous electrolyte may include a non-aqueous electrolytic solution and lithium. Examples of a non-aqueous electrolyte are a non-aqueous electrolytic solution, an organic solid electrolyte, and an inorganic solid electrolyte.

A non-limiting example of a non-aqueous electrolytic solution is a nonprotonic organic solvent, such as N-methyl-2-pyrrolidone, propylene carbonate, ethylene carbonate, butylene carbonate, dimethyl carbonate, diethyl carbonate, gamma-butyrolactone, 1,2-dimethoxy ethane, tetrahydrofuran, 2-methyl tetrahydrofuran, dimethylsulfoxide, 1,3-dioxolane, formamide, dimethylformamide, acetonitrile, nitromethane, methyl formic acid, methyl acetic acid, phosphoric acid triester, trimethoxy methane, dioxolane derivatives, sulfolanes, methyl sulfolanes, 1,3-dimethyl-2-imidazolidinone, propylene carbonate derivatives, tetrahydrofuran derivatives, ethers, methyl propionic acid, and ethyl propionic acid.

Examples of an organic solid electrolyte are a polyethylene derivative, a polyethylene oxide derivative, a polypropylene oxide derivative, an ester phosphate polymer, polyester sulfide, polyvinyl alcohol, poly vinylidene fluoride, and a polymer containing an ionic dissociating group.

Examples of an inorganic solid electrolyte are a nitride, halide, or sulfide of Li, such as $Li_3N$, LiI, $Li_5NI_2$, $Li_3N$-LiI-LiOH, $Li_2SiS_3$, $Li_4SiO_4$, $Li_4SiO_4$-LiI-LiOH, and $Li_3PO_4$-$Li_2S$-$SiS_2$.

The lithium salts may be any one of various materials that are used in a conventional lithium battery and are easily dissolved in a non-aqueous electrolyte. Examples of the lithium salts are LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiA_1Cl_4$, $(CF_3SO_2)_2NLi$, lithium chloro borate, low aliphatic carbonic acid lithium, 4 phenyl boric acid lithium, and a combination thereof.

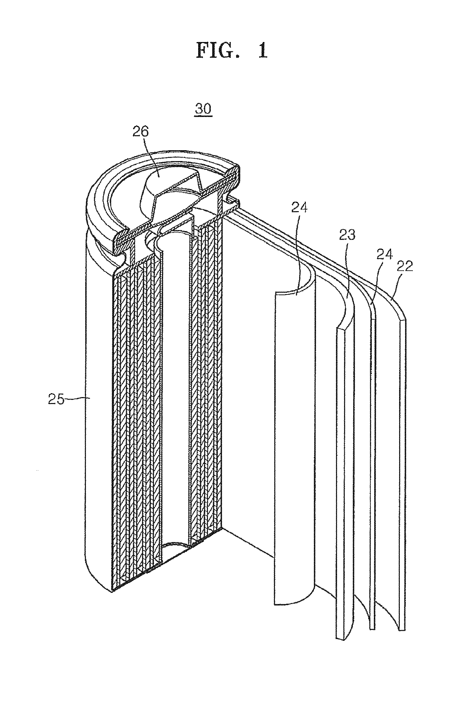

FIG. 1 is a schematic perspective view of a lithium battery 30 according to an embodiment of the present invention.

Referring to FIG. 1, the lithium battery 30 includes a positive electrode 23, a negative electrode 22, and a separator 24 interposed between the positive electrode 23 and the negative electrode 22. The positive electrode 23, the negative electrode 22, and the separator 24 are wound or folded to be placed in a battery case 25. Then, an electrolyte is injected into the battery case 25 and the resultant structure is sealed by a sealing member 26, thereby completing manufacturing of the lithium battery 30. The battery case 25 may be cylindrical, rectangular, or thin-film shape. The lithium battery 30 may be a lithium ion battery.

The lithium battery 30 may be used, for example, in a conventional mobile phone or a conventional portable computer. The lithium battery 30 may also be used, for example, in applications requiring high capacity, high output, and high-temperature operation, such as in electric vehicles. In addition, the lithium battery 30 may be combined with a conventional internal-combustion engine, fuel cell, or super capacity to be used in a hybrid vehicle. Furthermore, the lithium battery 30 may be used in various other applications requiring high output, high voltage, and high-temperature operation.

Hereinafter, the present invention will be described in further detail with reference to examples and comparative examples. However, the present invention is not limited to the examples.

## Preparation Example 1: Synthesis of LiFePO$_4$

$LiFePO_4$ was prepared by solid-phase synthesis. $FeC_2O_4 \cdot 2H_2O$, $NH_4H_2PO_4$, and $Li_2CO_3$ were mixed in a stoichiometric ratio corresponding to $LiFePO_4$ and milled to prepare an active material. Then, sucrose was added to the active material in an amount of 5% of the active material, and calcination was performed thereon at a temperature of 700°C while $N_2$ was provided at an inert atmosphere for 8 hours, thereby synthesizing $LiFePO_4$.

## Preparation Example 2: Synthesis of LiNi$_{0.8}$Co$_{0.15}$Al$_{0.05}$O$_2$

In order to prepare $LiNi_{0.8}Co_{0.15}Al_{0.05}O_2$ as an NCA positive active material, nitrate hydrates of Ni, Co, and Al were mixed in a mixed ratio corresponding to a stoichiometric ratio (Ni: Co: Al= 0.8:0.15:0.05) to prepare a homogeneous solution, and ammonia water was added thereto to adjust a pH of the solution to a pH of 9 and then co-precipitation was performed thereon. Then, the precipitate was washed and dried at a temperature of 150°C for 6 hours. Then, $Li_2CO_3$ was mixed in an amount corresponding to the mole ratio described above with the resultant product and the mixture was milled and sintered at a temperature of 750°C for 12 hours, thereby completing synthesis of $LiNi_{0.8}Co_{0.15}Al_{0.05}O_2$.

**Preparation Example 3: Synthesis of LiNi$_{0.6}$Co$_{0.2}$Mn$_{0.2}$O$_2$**

In order to prepare LiNi$_{0.6}$Co$_{0.2}$Mn$_{0.2}$O$_2$ as an NCM positive active material, nitrate hydrates of Ni, Co, and Mn were mixed in a mixed ratio corresponding to a stoichiometric ratio (Ni:Co:Mn = 0.6:0.2:0.2) to prepare a homogeneous solution, and ammonia water was added thereto to adjust a pH of the solution to a pH of 10 and then co-precipitation was performed thereon. Then, the precipitate was washed and dried at a temperature of 150°C for 6 hours. Then, Li$_2$CO$_3$ was mixed in an amount corresponding to the mole ratio described above with the resultant product and the mixture was milled and sintered at a temperature of 870°C for 20 hours, thereby completing synthesis of LiNi$_{0.6}$Co$_{0.2}$Mn$_{0.2}$O$_2$.

Particle distributions of the positive active materials prepared according to Preparation Examples 1 to 3 were measured, and the results are shown in Table 1 below.

**Table 1**

| Positive active material | Particle Composition | D50 | D10 | D90 |
|---|---|---|---|---|
| Preparation Example 1 | LiFePO$_4$ | 1.54 | 0.45 | 6.45 |
| Preparation Example 2 | LiNi$_{0.8}$Co$_{0.15}$Al$_{0.05}$O$_2$ | 3.04 | 1.07 | 7.78 |
| Preparation Example 3 | LiNi$_{0.6}$Co$_{02}$Mn$_{0.2}$O$_2$ | 3.23 | 1.15 | 8.65 |

**Evaluation Examples 1 and 2: Evaluation of pellet density according to mixed ratio of positive active materials (Evaluation Example 1) and evaluation of electrical conductivity according to mixed ratio of positive active materials (Evaluation Example 2)**

**Examples 1 to 5 and Comparative Examples 1 to 6: mixing of LFP (LiFePO$_4$) and NCA (LiNi$_{0.8}$Co$_{0.15}$Al$_{0.05}$O$_2$)**

LiFePO$_4$ (hereinafter referred to as 'LFP') powder prepared according to Preparation Example 1 and LiNi$_{0.8}$Co$_{0.15}$Al$_{0.05}$O$_2$ (hereinafter referred to as 'NCA') powder prepared according to Preparation Example 2 were mixed in a predetermined ratio and pressed to prepare pellets.

Pellet density and electrical conductivity according to a mixed ratio of positive active materials and applied pressure were measured for each of Examples 1 to 5 and Comparative Examples 1 to 6, and the results are shown in Tables 2 and 3 below. Tables 2 and 3 also show the components and the composition ratios of the positive active materials used in each of the examples and the comparative examples.

**Table 2**

| | Positive active material composition, wt.% | | Applied pressure (kN) | 4 | 8 | 12 | 16 | 20 |
|---|---|---|---|---|---|---|---|---|
| | LFP | NCA | | | | | | |
| Comparative Example 1 | 100 | - | Pellet density (g/cc) | 2.03 | 2.18 | 2.28 | 2.38 | 2.46 |
| Example 1 | 99 | 1 | Pellet density (g/cc) | 2.04 | 2.19 | 2.30 | 2.42 | 2.48 |
| Example 2 | 95 | 5 | Pellet density (g/cc) | 2.17 | 2.30 | 2.41 | 2.48 | 2.57 |
| Example 3 | 90 | 10 | Pellet density (g/cc) | 2.23 | 2.37 | 2.47 | 2.56 | 2.64 |
| Example 4 | 80 | 20 | Pellet density (g/cc) | 2.25 | 2.42 | 2.54 | 2.64 | 2.75 |
| Example 5 | 70 | 30 | Pellet density (g/cc) | 2.31 | 2.47 | 2.60 | 2.72 | 2.82 |
| Comparative Example 2 | 60 | 40 | Pellet density (g/cc) | 2.33 | 2.52 | 2.68 | 2.83 | 2.94 |
| Comparative Example 3 | 50 | 50 | Pellet density (g/cc) | 2.54 | 2.69 | 2.78 | 2.88 | 2.95 |

(continued)

| | Positive active material composition, wt.% | | Applied pressure (kN) | 4 | 8 | 12 | 16 | 20 |
|---|---|---|---|---|---|---|---|---|
| | LFP | NCA | | | | | | |
| Comparative Example 4 | 20 | 80 | Pellet density (g/cc) | 2.83 | 2.97 | 3.05 | 3.14 | 3.37 |
| Comparative Example 5 | 10 | 90 | Pellet density (g/cc) | 2.92 | 3.05 | 3.15 | 3.28 | 3.44 |
| Comparative Example 6 | - | 100 | Pellet density (g/cc) | 3.01 | 3.16 | 3.29 | 3.40 | 3.52 |

**Table 3**

| | Positive active material composition, wt.% | | Applied pressure (kN) | 4 | 8 | 12 | 16 | 20 |
|---|---|---|---|---|---|---|---|---|
| | LFP | NCA | | | | | | |
| Comparative Example 1 | 100 | - | Electrical conductivity (S/cm) | 3.4E-03 | 4.3E-03 | 5.0E-03 | 5.6E-03 | 6.1E-03 |
| Example 1 | 99 | 1 | Electrical conductivity (S/cm) | 3.5E-03 | 4.4E-03 | 5.1E-03 | 5.7E-03 | 6.2E-03 |
| Example 2 | 95 | 5 | Electrical conductivity (S/cm) | 3.6E-03 | 4.6E-03 | 5.4E-03 | 6.1E-03 | 6.7E-03 |
| Example 3 | 90 | 10 | Electrical conductivity (S/cm) | 3.8E-03 | 4.9E-03 | 5.7E-03 | 6.4E-03 | 7.0E-03 |
| Example 4 | 80 | 20 | Electrical conductivity (S/cm) | 3.5E-03 | 4.6E-03 | 5.5E-03 | 6.3E-03 | 7.1E-03 |
| Example 5 | 70 | 30 | Electrical conductivity (S/cm) | 3.5E-03 | 4.5E-03 | 5.5E-03 | 6.4E-03 | 7.2E-03 |
| Comparative Example 2 | 60 | 40 | Electrical conductivity (S/cm) | 2.2E-03 | 3.2E-03 | 4.1E-03 | 4.9E-03 | 5.7E-03 |
| Comparative Example 3 | 50 | 50 | Electrical conductivity (S/cm) | 2.9E-03 | 4.1E-03 | 4.9E-03 | 5.8E-03 | 6.5E-03 |
| Comparative Example 4 | 20 | 80 | Electrical conductivity (S/cm) | 3.2E-03 | 5.6E-03 | 7.8E-03 | 1.0E-02 | 1.1E-02 |
| Comparative Example 5 | 10 | 90 | Electrical conductivity (S/cm) | 4.1E-03 | 7.4E-03 | 9.5E-03 | 1.2E-02 | 1.4E-02 |
| Comparative Example 6 | - | 100 | Electrical conductivity (S/cm) | 6.5E-03 | 9.8E-03 | 1.2E-02 | 1.5E-02 | 1.7E-02 |

Examples 6 to 10 which are not forming part of the present invention and Comparative Examples 7 to 11: Mixing of LFP (LiFePO$_4$) and NCM (LiNi$_{0.6}$Co$_{0.2}$Mn$_{0.2}$O$_2$)

LiFePO$_4$ (LFP) powder as the positive active material prepared according to Preparation Example 1 and LiNi$_{0.6}$Co$_{0.2}$Mn$_{0.2}$O$_2$ (hereinafter referred to as 'NCM') powder as the positive active material prepared according to Preparation Example 3 were mixed in a predetermined ratio and pressed to prepare pellets.

The pellet density and electrical conductivity according to a mixed ratio of positive active materials and applied pressure were measured for each of Examples 6 to 10 and Comparative Examples 7 to 11, and the results are shown in Tables 4 and 5 below. Tables 4 and 5 also show the components and the composition ratios of the positive active materials used in each of the examples and the comparative examples

Table 4

| | Positive active material composition, wt.% | | Applied pressure (kN) | 4 | 8 | 12 | 16 | 20 |
|---|---|---|---|---|---|---|---|---|
| | LFP | NCM | | | | | | |
| Comparative Example 7 | 100 | to | Pellet density (g/cc) | 2.03 | 2.18 | 2.28 | 2.38 | 2.46 |
| Example 6 | 99 | 1 | Pellet density (g/cc) | 2.04 | 2.21 | 2.34 | 2.44 | 2.54 |
| Example 7 | 95 | 5 | Pellet density (g/cc) | 2.07 | 2.28 | 2.38 | 2.50 | 2.60 |
| Example 8 | 90 | 10 | Pellet density (g/cc) | 2.14 | 2.29 | 2.41 | 2.52 | 2.61 |
| Example 9 | 80 | 20 | Pellet density (g/cc) | 2.27 | 2.46 | 2.61 | 2.72 | 2.83 |
| Example 10 | 70 | 30 | Pellet density (g/cc) | 2.50 | 2.74 | 2.89 | 3.01 | 3.12 |
| Comparative Example 8 | 50 | 50 | Pellet density (g/cc) | 2.54 | 2.73 | 2.91 | 3.05 | 3.20 |
| Comparative Example 9 | 20 | 80 | Pellet density (g/cc) | 2.82 | 2.93 | 3.10 | 3.29 | 3.41 |
| Comparative Example 10 | 10 | 90 | Pellet density (g/cc) | 2.90 | 3.01 | 3.19 | 3.41 | 3.49 |
| Comparative Example 11 | to | 100 | Pellet density (g/cc) | 2.98 | 3.15 | 3.35 | 3.49 | 3.70 |

Table 5

| | Positive active material composition, wt.% | | Applied pressure (kN) | 4 | 8 | 12 | 16 | 20 |
|---|---|---|---|---|---|---|---|---|
| | LFP | NCM | | | | | | |
| Comparative Example 7 | 100 | to | Electrical conductivity (S/cm) | 3.4E-03 | 4.3E-03 | 5.0E-03 | 5.6E-03 | 6.1E-03 |
| Example 6 | 99 | 1 | Electrical conductivity (S/cm) | 4.7E-03 | 6.5E-03 | 7.3E-03 | 7.8E-03 | 9.0E-03 |

(continued)

| | Positive active material composition, wt.% | | Applied pressure (kN) | 4 | 8 | 12 | 16 | 20 |
|---|---|---|---|---|---|---|---|---|
| | LFP | NCM | | | | | | |
| Example 7 | 95 | 5 | Electrical conductivity (S/cm) | 4.8E-03 | 6.5E-03 | 7.3E-03 | 8.3E-03 | 9.1E-03 |
| Example 8 | 90 | 10 | Electrical conductivity (S/cm) | 4.7E-03 | 6.5E-03 | 7.4E-03 | 8.4E-03 | 9.0E-03 |
| Example 9 | 80 | 20 | Electrical conductivity (S/cm) | 4.8E-03 | 6.2E-03 | 7.2E-03 | 8.1E-03 | 8.8E-03 |
| Example 10 | 70 | 30 | Electrical conductivity (S/cm) | 4.3E-03 | 5.7E-03 | 6.5E-03 | 7.2E-03 | 7.9E-03 |
| Comparative Example 8 | 50 | 50 | Electrical conductivity (S/cm) | 3.4E-03 | 4.6E-03 | 5.3E-03 | 6.E-03 | 6.7E-03 |
| Comparative Example 9 | 20 | 80 | Electrical conductivity (S/cm) | 3.1E-03 | 4.2E-03 | 5.0E-03 | 5.9E-03 | 6.6E-03 |
| Comparative Example 10 | 10 | 90 | Electrical conductivity (S/cm) | 3.0E-03 | 4.2E-03 | 4.9E-03 | 5.8E-03 | 6.6E-03 |
| Comparative Example 11 | to | 100 | Electrical conductivity (S/cm) | 2.9E-03 | 4.1E-03 | 4.9E-03 | 5.8E-03 | 6.5E-03 |

As shown in Tables 2 to 5, pellet density when LFP was combined with a nickel-based positive active material, such as NCA or NCM, was higher than that when only LFP was used as a positive active material (Comparative Example 1). Also, the higher the mixed ratio of the nickel-based positive active material to LFP and the higher the applied pressure, the higher the pellet density.

Regarding electrical conductivity, when LFP was combined with NCA as the nickel-based positive active material, since NCA had higher electrical conductivity than LFP, in most cases, the greater an amount of NCA, the higher the electrical conductivity. In particular, when small amounts of NCA were used (for example, 1wt.%, 5 wt.%, 10 wt.%) electrical conductivity increased linearly up to the amount of 30 wt.% and the conductivity was maintained at a relatively high level. On the other hand, when the amount of NCA was 40 wt.% and 50 wt.%, electrical conductivity was relatively decreased. However, if the amount of NCA was further increased (for example, to 80 wt.% and 90 wt.%), electrical conductivity was increased. The decrease in electrical conductivity at the amounts of 40 wt.% and 50 wt.% may be due to non-uniform mixing of the two active materials. However, when the amount of NCA was 40 wt.% or more, thermal stability was decreased as illustrated by the penetration test results shown in Evaluation Example 4 below, although the electrical conductivity was increased.

Also, when an amount of NCM as the nickel-based positive active material was from about 1 to about 30 wt.%, electrical conductivity was higher than when the amount of NCM was greater than 30 wt.%. Although electrical conductivity of NCM was lower than electrical conductivity of NCA and higher than electrical conductivity of LFP, when pressure was applied and thus pellet density was increased, the mixing of LFP and NCM as the active materials resulted in higher electrical conductivity than when LFP and NCM were used separately.

**Examples 11 to 15 and Comparative Examples 12 to 17:** Preparation of positive electrodes and manufacturing of lithium batteries using the positive electrodes

LFP($LiFePO_4$) and NCA($LiNi_{0.8}Co_{0.15}Al_{0.05}O_2$) prepared according to Preparation Examples 1 and 2, respectively were mixed in mixed ratios of Examples 1 to 5 and Comparative Examples 1 to 6, and mixed with , polyvinylidenefluoride (PVdF) as a binder, and carbon as a conductive agent in a weight ratio of 96:2:2.The mixture was then dispersed in N-methylpyrrolidone to prepare a positive electrode slurry. The positive electrode slurry was coated to a thickness of 60 $\mu$m on an aluminium foil to form a thin electrode plate, and then the thin electrode plate was dried at a temperature of 135°C for 3 hours or more and pressed, thereby completing of manufacturing a positive electrode.

Separately, artificial graphite as a negative active material, and polyvinylidene fluoride as a binder were mixed in a weight ratio of 96:4, and the mixture was dispersed in an N-methylpyrrolidone solvent to prepare a negative electrode slurry.

The negative electrode slurry was coated to a thickness of 14 $\mu$m on a copper (Cu) foil to form a thin electrode plate, and then the thin electrode plate was dried at a temperature of 135°C for 3 or more hours and pressed, thereby completing manufacturing of a negative electrode.

An electrolytic solution was prepared by adding 1.3M $LiPF_6$ to a mixed solvent including ethylene carbonate(EC), ethylmethyl carbonate(EMC), and dimethyl carbonate(DMC) in a volumetric ratio of 1:1:1.

A porous polyethylene (PE) film as a separator was interposed between the positive electrode and the negative electrode to form a battery assembly, and the battery assembly was wound and pressed to be placed in a battery case, and then, the electrolytic solution was injected into the battery case, thereby completing a lithium secondary battery having a capacity of 2600 mAh.

**Evaluation Example 3:** Charge and discharge test

A charge and discharge test was performed on each of coin cells manufactured by using the positive electrode plate used in the lithium secondary batteries manufactured according to Examples 11 to 15 and Comparative Examples 12 to 17, metal lithium as a counter electrode, and the same electrolyte. The coin cells were charged with a current of 15 mA per 1 g of a positive active material until a voltage reached 4.0 V (vs. Li), and then discharged with the same magnitude of current until the voltage reached 2.0 V (vs. Li). Then, charging and discharging were repeatedly performed 50 times within the same current and voltage ranges. An initial coulombic efficiency is represented by Equation 1 below, a lifetime capacity retention rate is represented by Equation 2 below, and a rate capacity retention rate is represented by Equation 3 below.

Equation 1

$$\text{Initial coulombic efficiency [\%]} = [\text{discharge capacity in a 1st cycle/charge capacity in a 1}^{\text{st}} \text{cycle}] \times 100$$

Equation 2

$$\text{Lifetime capacity retention rate [\%]} = \text{discharge capacity in a 100th cycle/ discharge capacity in a 2}^{\text{nd}} \text{cycle}$$

Equation 3

$$\text{Rate capacity retention rate [\%]} = \text{discharge capacity at a corresponding C-rate/ discharge capacity in an initial 0.1C-rate}$$

Initial coulombic efficiency and lifetime capacity retention rate of Examples 11 to 15 and Comparative Examples 12 to 17 are shown in Table 6 below.

**Table 6**

| | Positive active material composition, wt.% | | Initial coulombic efficiency (%) | Lifetime capacity retention rate (%) @ 100 cycle |
|---|---|---|---|---|
| | LFP | NCA | | |
| Comparative Example 12 | 100 | to | 91.5 | 82.7 |
| Example 11 | 99 | 1 | 91.9 | 82.8 |
| Example 12 | 95 | 5 | 92.0 | 84.2 |
| Example 13 | 90 | 10 | 91.6 | 84.8 |
| Example 14 | 80 | 20 | 92.1 | 85.4 |
| Example 15 | 70 | 30 | 93.1 | 84.5 |
| Comparative Example 13 | 60 | 40 | 92.9 | 80.8 |
| Comparative Example 14 | 50 | 50 | 92.7 | 78.8 |
| Comparative Example 15 | 20 | 80 | 92.7 | 74.5 |
| Comparative Example 16 | 10 | 90 | 92.8 | 73.4 |
| Comparative Example 17 | to | 100 | 92.8 | 72.8 |

As shown in Table 6, the lithium secondary batteries manufactured according to Examples 11 to 15 have higher initial coulombic efficiency and lifetime capacity retention rate than the lithium secondary batteries manufactured according to Comparative Examples 12 to 17. That is, the greater an amount of NCA ($LiNi_{0.8}Co_{0.15}Al_{0.05}O_2$) in a positive active material, the higher the initial coulombic efficiency. However, when the amount of NCA is greater than 30wt.%, the increase in the initial coulombic efficiency was saturated and thus, the initial coulombic efficiency was not increased any more. Regarding the lifetime capacity retention rate, when 40 wt.% or more of NCA was included, the lifetime capacity retention rate was rapidly reduced. That is, although the initial coulombic efficiency was increased due to improvement in low conductivity of LFP ($LiFePO_4$) caused by mixing with NCA, when the amount of NCA was 40 wt.% or more, lifetime characteristics of LFP were reduced. In consideration of the results above, it was confirmed that an appropriate amount of NCA was equal to or lower than 30 wt.%.

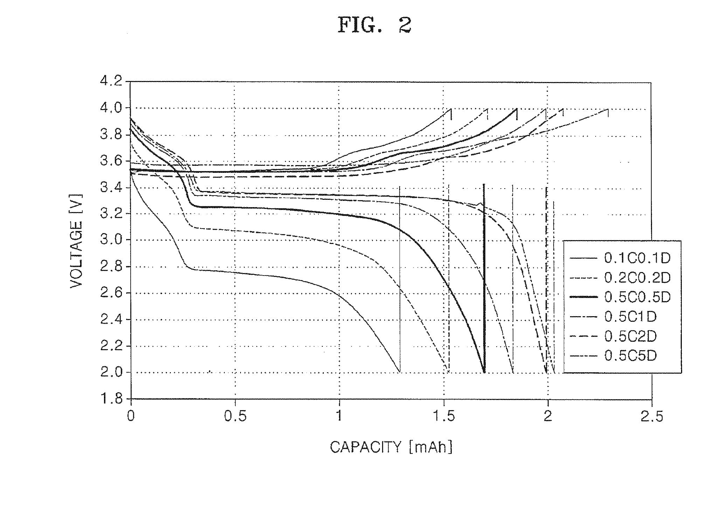

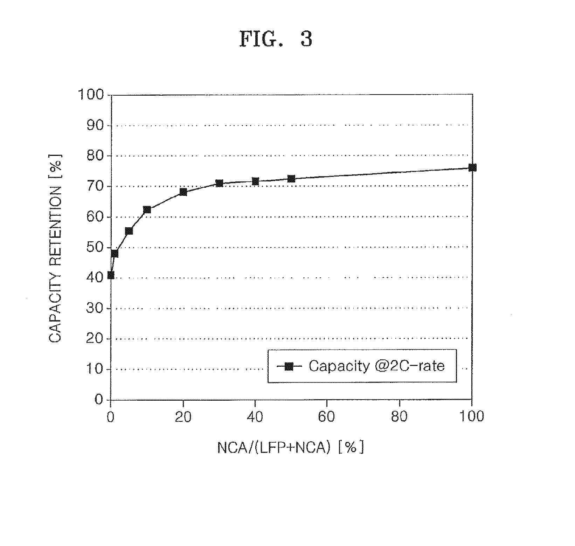

Rate charge discharge results of the lithium secondary battery of Example 14 manufactured by using the LFP positive active material including 20 wt.% NCA are shown in FIG. 2. Also, the discharge capacity retention rate [%] at 2 C-rate was measured according to a mixed ratio of LFP to NCA, and the results are shown in FIG. 3.

Referring to FIG. 2, the higher the discharge rate, the smaller the discharge capacity. Such results may be due to increasing resistance. However, when a mixed ratio of NCA was increased, as shown in FIG. 3, the discharge capacity retention rate [%] was increased until the amount of NCA reached about 30 wt.%. Such results may be due to an increase in conductivity due to mixing with NCA, and it was confirmed that the capacity increase is saturated when the amount of NCA is about 30 wt.%

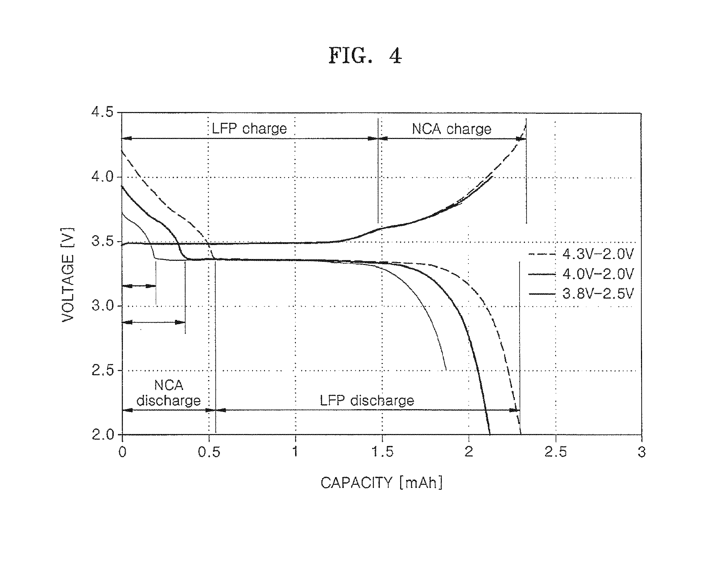

Regarding a LFP/NCA mixed positive electrode, in order to confirm a capacity ratio of respective active materials, a charge and discharge test was performed on the lithium secondary battery of Example 14 manufactured by using the LFP positive active material including 20 wt.% of NCA under various charge and discharge conditions, and the results are shown in FIG. 4. A capacity ratio of the respective positive active materials was roughly determined and represented by arrows. As shown in FIG. 4, the higher the charge cut-off voltage, the greater the capacity. Such a result may be due to the fact that the higher charge and discharge potential of NCA than LFP results in higher charge voltage, thereby inducing expression of capacity of NCA. If the charge cut-off voltage is controlled to sufficiently express the capacity of NCA in the LFP/NCA mixed positive electrode, the capacity of NCA may be sufficiently used up to 40% or more or 70% or more.

**Evaluation Example 4: Penetration test**

A penetration test was performed on each of the lithium secondary batteries manufactured using the positive electrodes prepared according to Examples 11-15, and Comparative Examples 12, 13, 15, 16, and 17, and the results are shown in Table 7 below.

The penetration test was performed as follows: the lithium secondary batteries manufactured using the positive electrodes prepared according to Example 15, and Comparative Examples 12, 13, 15, 16, and 17 were charged with a current of 0.5 C until a voltage reached 4.2 V for 3 hours, and left for about 10 minutes (possible up to 72 hours). Then, a center of the lithium secondary battery was completely penetrated by a pin having a diameter of 5 mm moving at a speed of 60 mm/sec. In Table 4, LX (where X is about 0 to about 5) shows stability of a battery, and if the X value is smaller, stability of a battery is increased. That is, LX has the following meanings.

L0: no change, L1: leakage, L2: fumed, L3: combustion while dissipating 200 °C or low of heat, L4: combustion while dissipating 200°C or more of heat, L5: explosion

**Table 7**

| | Positive active material composition, wt.% | | Penetration test |
|---|---|---|---|
| | LFP | NCA | |
| Comparative Example 12 | 100 | to | L0 |
| Example 11 | 99 | 1 | L0 |
| Example 12 | 95 | 5 | L0 |
| Example 13 | 90 | 10 | L0 |
| Example 14 | 80 | 20 | L0 |
| Example 15 | 70 | 30 | L1 |
| Comparative Example 13 | 60 | 40 | L4 |
| Comparative Example 15 | 20 | 80 | L4 |
| Comparative Example 16 | 10 | 90 | L4 |
| Comparative Example 17 | to | 100 | L4 |

As shown in Table 6, up to 30 wt.% of NCA($LiNi_{0.8}Co_{0.15}Al_{0.05}O_2$), combustion did not occur in the penetration test. Thus, it was confirmed that the lithium secondary battery had high thermal stability. However, when the amount of NCA was 40 wt.% or more, combustion occurred in the penetration test. Thus, it was confirmed that the lithium secondary battery had low thermal stability. Accordingly, it can be seen that the lithium secondary batteries of Example have higher thermal stability than those of Comparative Examples.

While the present invention has been described in connection with certain exemplary embodiments thereof, it is to be understood that the invention is not limited to the disclosed embodiments, but, on the contrary, is intended to cover various modifications and equivalent arrangements included within the scope of the appended claims.

**Claims**

1. A positive active material for a lithium secondary battery comprising:

   from 70 to 99 weight % of a phosphate compound having an olivine structure;
   and from 1 to 30 weight% of $LiNi_{0.8}Co_{0.15}Al_{0.05}O_2$, **characterised in that** the particle diameter of primary particles of the phosphate compound is from 50 nm to 2000 nm;
   wherein the primary or secondary particles of the $LiNi_{0.8}Co_{0.15}Al_{0.05}O_2$ have an average particle diameter (D50) from 0.2 $\mu$m to 20 $\mu$m; and
   wherein the $LiNi_{0.8}Co_{0.15}Al_{0.05}O_2$ has a particle distribution of which the average particle diameter (D50) is greater than that of the phosphate compound.

2. The positive active material of claim 1, wherein the phosphate compound having an olivine structure is represented by Formula 1:

$$LiMPO_4 \qquad \text{Formula 1}$$

wherein M includes at least one element selected from the group consisting of Fe, Mn, Ni, Co and V.

3. The positive active material of claim 1 or claim 2, wherein the phosphate compound having an olivine structure is $LiFePO_4$.

4. The positive active material of any preceding claim, comprising from 80 to 95 weight % of the phosphate compound having the olivine structure and from 5 to 20 weight % of $LiNi_{0.8}Co_{0.15}Al_{0.05}O_2$.

5. An electrode for a lithium secondary battery comprising the positive active material according to any preceding claim.

6. The electrode of claim 5, wherein the electrode has an active mass density of from 2.1 g/cc to 2.7 g/cc.

7. A lithium secondary battery comprising:

   a positive electrode according to claim 5 or claim 6;
   a negative electrode facing the positive electrode; and
   a separator interposed between the positive electrode and the negative electrode.

8. Use of a composition comprising from 70 to 99 weight % of a phosphate compound having an olivine structure, and from 1 to 30 wt.% of $LiNi_{0.8}Co_{0.15}Al_{0.05}O_2$, as a positive active material for a lithium secondary battery, **characterised in that** the particle diameter of primary particles of the phosphate compound is from 50 nm to 2000 nm;
   wherein the primary or secondary particles of the $LiNi_{0.8}Co_{0.15}Al_{0.05}O_2$ have an average particle diameter (D50) from 0.2 $\mu$m to 20 $\mu$m; and
   wherein the $LiNi_{0.8}Co_{0.15}Al_{0.05}O_2$ has a particle distribution of which the average particle diameter (D50) is greater than that of the phosphate compound.

**Patentansprüche**

1. Positiv-Aktivmaterial für eine Lithiumsekundärbatterie, umfassend:

   von 70 bis 99 Gew.-% einer Phosphatverbindung mit Olivinstruktur;
   und von 1 bis 30 Gew.-% $LiNi_{0.8}Co_{0.15}Al_{0.05}O_2$,
   **dadurch gekennzeichnet, dass**
   der Teilchendurchmesser der Primärpartikel der Phosphatverbindung von 50 nm bis 2000 nm beträgt;
   wobei die Primär- oder Sekundärpartikel von $LiNi_{0.8}Co_{0.15}Al_{0.05}O_2$ einen mittleren Teilchendurchmesser (D50) von 0,2 $\mu$m bis 20 $\mu$m aufweisen; und
   wobei $LiNi_{0.8}Co_{0.15}Al_{0.05}O_2$ eine Teilchenverteilung aufweist, deren mittlerer Teilchendurchmesser (D50) größer als der der Phosphatverbindung ist.

2. Positiv-Aktivmaterial nach Anspruch 1, wobei die Phosphatverbindung mit Olivinstruktur durch Formel 1 wiedergegeben wird:

$$LiMPO_4 \qquad \text{Formel 1}$$

   wobei M mindestens ein Element, ausgewählt aus der Gruppe bestehend aus Fe, Mn, Ni, Co und V, umfasst.

3. Positiv-Aktivmaterial nach Anspruch 1 oder Anspruch 2, wobei die Phosphatverbindung mit Olivinstruktur $LiFePO_4$ ist.

4. Positiv-Aktivmaterial nach einem vorangehenden Anspruch, umfassend von 80 bis 95 Gew.-% der Phosphatverbindung mit der Olivinstruktur und von 5 bis 20 Gew.-% $LiNi_{0.8}Co_{0.15}Al_{0.05}O_2$.

5. Elektrode für eine Lithiumsekundärbatterie, umfassend das Positiv-Aktivmaterial nach einem vorangehenden Anspruch.

**6.** Elektrode nach Anspruch 5, wobei die Elektrode eine Dichte der Aktivmasse von 2,1 g/cm$^3$ bis 2,7 g/cm$^3$ aufweist.

**7.** Lithiumsekundärbatterie, umfassend:

eine positive Elektrode nach Anspruch 5 oder Anspruch 6;
eine negative Elektrode, gegenüberliegend der positiven Elektrode; und
einen Separator, eingefügt zwischen der positiven Elektrode und der negativen Elektrode.

**8.** Verwendung einer Zusammensetzung, umfassend von 70 bis 99 Gew.-% einer Phosphatverbindung mit Olivinstruktur, und von 1 bis 30 Gew.-% $LiNi_{0,8}Co_{0,15}Al_{0,05}O_2$, als Positiv-Aktivmaterial für eine Lithiumsekundärbatterie, **dadurch gekennzeichnet, dass**
der Teilchendurchmesser der Primärpartikel der Phosphatverbindung von 50 nm bis 2000 nm beträgt;
wobei die Primär- oder Sekundäipartikel von $LiNi_{0,8}Co_{0,15}Al_{0,05}O_2$ einen mittleren Teilchendurchmesser (D50) von 0,2 $\mu$m bis 20 $\mu$m aufweisen; und
wobei $LiNi_{0,8}Co_{0,15}Al_{0,05}O_2$ eine Teilchenverteilung aufweist, deren mittlerer Teilchendurchmesser (D50) größer als der der Phosphatverbindung ist.

## Revendications

**1.** Matière active positive pour une pile au lithium, comprenant : 70 à 99 % en poids d'un phosphate ayant une structure d'olivine ; et 1 à 30 % en poids de $LiNi_{0,8}Co_{0,15}Al_{0,05}O_2$,
**caractérisée en ce que** le diamètre de particule des particules primaires du phosphate va de 50 nm à 2000 nm ;
dans laquelle les particules primaires et secondaires du $LiNi_{0,8}Co_{0,15}Al_{0,05}O_2$ ont un diamètre moyen de particules (D50) de 0,2 $\mu$m à 20 $\mu$m ; et
dans laquelle le $LiNi_{0,8}Co_{0,15}Al_{0,05}O_2$ a une distribution des particules dont le diamètre moyen de particule (D50) est supérieur à celui du phosphate.

**2.** Matière active positive suivant la revendication 1, dans laquelle le phosphate ayant une structure d'olivine est représentée par la formule 1 :

$$LiMPO_4 \qquad \text{Formule 1}$$

Dans laquelle M comprend au moins un élément choisi dans le groupe consistant en Fe, Mn, Ni, Co et V.

**3.** Matière active positive suivant la revendication 1 ou la revendication 2, dans laquelle le phosphate ayant une structure d'olivine est $LiFePO_4$.

**4.** Matière active positive suivant l'une quelconque des revendications précédentes, comprenant 80 à 95 % en poids du phosphate ayant la structure d'olivine et 5 à 20 % en poids de $LiNi_{0,8}Co_{0,15}Al_{0,05}O_2$.

**5.** Electrode pour une pile au lithium comprenant la matière active positive suivant l'une quelconque des revendications précédentes.

**6.** Electrode suivant la revendication 5, dans laquelle ladite électrode ayant une densité de masse active de 2,1 g/cm$^3$ et 2,7 g/cm$^3$.

**7.** Pile au lithium comprenant :

une électrode positive suivant la revendication 5 ou 6 ;
une électrode négative faisant face à l'électrode positive ; et
un séparateur interposé entre l'électrode positive et l'électrode négative.

**8.** Utilisation d'une composition comprenant 70 à 99 % en poids d'un phosphate ayant une structure d'olivine, et 1 à 30 % en poids de $LiNi_{0,8}Co_{0,15}Al_{0,05}O_2$, comme matière active positive pour une pile au lithium, **caractérisée en ce que** le diamètre de particule des particules primaires du phosphate va de 50 nm à 2000 nm ;
dans laquelle les particules primaires ou secondaires du $LiNi_{0,8}Co_{0,15}Al_{0,05}O_2$ ont un diamètre moyen de particules (D50) de 0,2 $\mu$m à 20 $\mu$m ; et

dans laquelle le $LiNi_{0,8}Co_{0,15}Al_{0,05}O_2$ a une distribution des particules dont le diamètre moyen de particule (D50) est supérieur à celui du phosphate.

FIG. 1

FIG. 2

EP 2 498 323 B1

FIG. 3

FIG. 4

**EP 2 498 323 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007317538 A
- US 20100320972 A
- US 20100248038 A
- US 20070254209 A
- US 20090217513 A